# EUROPEAN PATENT APPLICATION

(11) **EP 4 835 420 A1**
(43) Date of publication of application: **04.11.2026**
(21) Application number: 24911048.7
(22) Date of filing: 23.12.2024
(51) Int. Cl.: G01K 1/14, G01K 7/22

(54) **CROSS-MEDIUM TEMPERATURE MEASUREMENT DEVICE AND KITCHEN COOKING APPLIANCE**

(30) Priority: 29.12.2023 CN 202323663169 U
(71) Applicant: Foshan Shunde Midea Electrical Heating Appliances Manufacturing Co., Ltd., Foshan, Guangdong 528311 (CN)
(72) Inventor: LIU, Bingli, Foshan, Guangdong 528311 (CN); PENG, Tengyi, Foshan, Guangdong 528311 (CN); REN, Xiangxi, Foshan, Guangdong 528311 (CN); HUANG, Shufeng, Foshan, Guangdong 528311 (CN); WANG, Yunfeng, Foshan, Guangdong 528311 (CN); ZHANG, Xiaocheng, Foshan, Guangdong 528311 (CN); XU, Chao, Foshan, Guangdong 528311 (CN); ZHENG, Liang, Foshan, Guangdong 528311 (CN); SHE, Yan, Foshan, Guangdong 528311 (CN)
(74) Representative: Ran, Handong
(86) International application number: PCT/CN2024/141517
(87) International publication number: WO 2025/140120

(57) **Abstract**

Provided in the embodiments of the present application are a cross-medium temperature measurement device and a kitchen cooking appliance. The cross-medium temperature measurement device comprises a thermal conductor, a temperature sensor and a thermal insulator. The temperature sensor is arranged in the thermal conductor, the thermal conductor is embedded in an installation chamber defined by a housing of the thermal insulator, an accommodation chamber formed in the thermal insulator is filled with a thermal insulation medium, and the thermal insulator wraps the thermal conductor so as to reduce the impact of the external environment on the thermal conductor, thus reducing the impact of the external environment on the temperature sensor, and finally making the cross-medium temperature measurement device provided by the embodiments of the present application have a higher measurement precision. In addition, a kitchen cooking appliance having the cross-medium temperature measurement device achieves more accurate temperature measurement of cooking utensils placed on the kitchen cooking appliance.

## Description

### CROSS-REFERENCE TO RELATED APPLICATIONS

The present application claims priority to Chinese patent application No. 2023236631699, filed on December 29, 2023, entitled "Cross-Medium Temperature Measurement Device and Kitchen Cooking Appliance", which is incorporated herein by reference in its entity for all purposes.

### FIELD

Embodiments of the present application relate to the field of temperature measurement, in particular, to a cross-medium temperature measurement device and a kitchen cooking appliance.

### BACKGROUND

Cooking appliances generally require monitoring temperature of food ingredients being heated or a cookware being used to match appropriate heating power and control strategies that influence the characteristics of the food ingredients. However, current temperature measurement methods in the appliance field are relatively limited. Typically, a single temperature sensor is provided at the appliance to implement temperature monitoring. The temperature sensor cannot directly contact the food ingredients or the cookware. This method of temperature measurement suffers from significant drawbacks in many situations, particularly when it is necessary to measure a temperature of another object crossing one object since the accuracy depends heavily on the thermal conductivity of the spanned object. Consequently, traditional temperature measurement devices often exhibit poor structural stability and are susceptible to influence from the external environment, resulting in low measurement accuracy.

### BRIEF SUMMARY

According to an embodiment of the present application, there is provided a cross-medium temperature measurement device to at least partially address the aforementioned problems.

According to an embodiment of the present application, there is provided a cross-medium temperature measurement device, including a thermal conductor, a temperature sensor, and a thermal insulator. The temperature sensor is provided inside the thermal conductor. The thermal insulator includes a housing and a thermal-insulation medium; the housing encloses a mounting cavity, where the thermal conductor is embedded inside the mounting cavity and abuts against the thermal insulator; an accommodation cavity is formed within the housing and the thermal-insulation medium is filled inside the accommodation cavity.

According to an embodiment of the present application, there is provided a kitchen cooking appliance provided with the cross-medium temperature measurement device as described above.

### BRIEF DESCRIPTION OF THE DRAWINGS

In order to illustrate solutions in embodiments of the present application more clearly, drawings used in descriptions of the embodiments are briefly introduced below. The drawings in the following description are only some of the embodiments of the present application, and other drawings may be obtained according to these drawings without any creative effort for those skilled in the art.
FIG. 1 illustrates a structural block diagram of a kitchen cooking appliance according to an embodiment of the present application;
FIG. 2 illustrates a schematic structural diagram of mounting a cross-medium temperature measurement device at an induction cooker according to an embodiment of the present application;
FIG. 3 illustrates a schematic structural diagram of a cross-medium temperature measurement device according to an embodiment of the present application;
FIG. 4 illustrates a schematic structural diagram of a thermal conductor, a temperature sensor and a wire according to an embodiment of the present application; and
FIG. 5 illustrates a schematic structural diagram of a temperature measurement device according to an embodiment of the present application.

### Reference signs:

1: kitchen cooking appliance; 10: cross-medium temperature measurement device; 110: thermal conductor; 111: first surface; 112: second surface; 113: contact portion; 114: support portion; 120: temperature sensor; 121: first temperature sensor; 122: second temperature sensor; 130: thermal insulator; 131: housing; 1311: mounting cavity; 1311a: first mounting cavity; 1311b: second mounting cavity; 1312: accommodation cavity; 1313: inner housing; 1314: outer housing; 132: thermal insulation medium; 133: communication hole; 140: wire; 20: microcrystalline panel; 30: base plate; 200: thermal isolator; 201: thermal isolation medium.

### DETAILED DESCRIPTION

Embodiments of the present application are described in detail below, and examples of the embodiments are illustrated in the accompanying drawings. The embodiments described below with reference to the accompanying drawings are exemplary, and are only intended to explain the present application, but should not be construed as limiting the present application.

To enable those skilled in the art to better understand the solutions of the present application, the solutions in the embodiments of the present application are clearly and completely described below in conjunction with the accompanying drawings in the embodiments of the present application. The described embodiments are part of the embodiments of the present application, rather than all of the embodiments. All other embodiments obtained by those skilled in the art based on the embodiments of the present application without any creative work belong to the scope of protection of the present application.

Cooking appliances generally require monitoring temperature of food ingredients being heated or a cookware being used to match appropriate heating power and control strategies that influence the characteristics of the food ingredients. However, current temperature measurement methods in the appliance field are relatively limited. Typically, a single temperature sensor is provided at the appliance to implement temperature monitoring. The temperature sensor cannot directly contact the food ingredients or the cookware. This method of temperature measurement suffers from significant drawbacks in many situations-particularly when it is necessary to measure a temperature of another object crossing one object since the accuracy depends heavily on the thermal conductivity of the spanned object.

Consequently, traditional temperature measurement devices often exhibit poor structural stability and are susceptible to influence from the external environment. For example, during the use of a cooking appliance, heat generated by the cooking appliance itself is frequently transferred to the temperature measurement device. This causes the device to simultaneously measure both the heat generated internally by the cooking appliance and the temperature of the food or cookware being heated. As it is difficult to distinguish these two distinct temperatures, the measurement accuracy of traditional temperature measurement devices is compromised. In view of these issues, according to an embodiment of the present application, there is provided a cross-medium temperature measurement device to at least partially address the aforementioned problems.

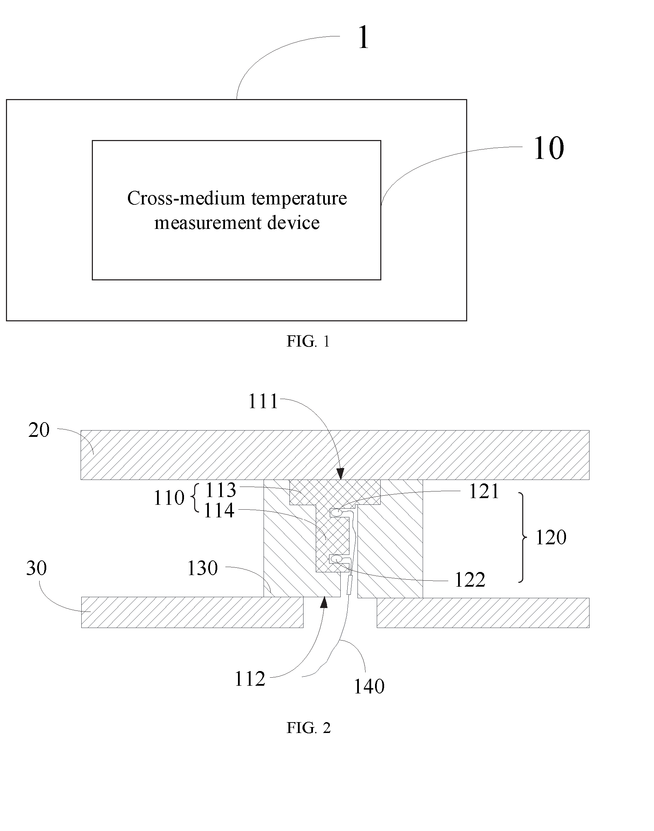

Referring to FIG. 1, FIG. 1 illustrates a structural block diagram of a kitchen cooking appliance according to an embodiment of the present application. The present embodiment further provides a kitchen cooking appliance 1 provided with the aforementioned cross-medium temperature measurement device 10. The kitchen cooking appliance 1 include, but not limited to: an induction cooker, a microwave oven, an air fryer, etc.

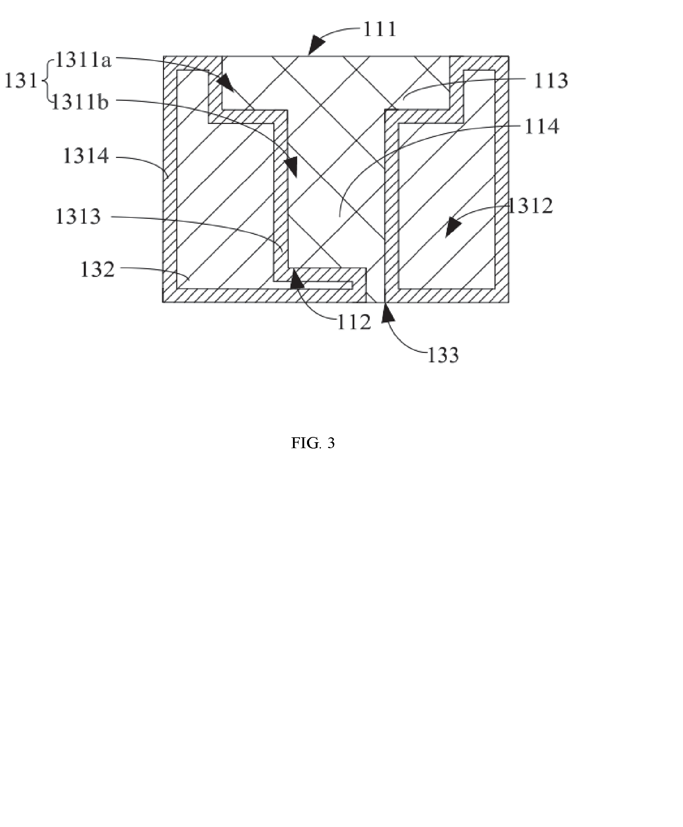

For ease of description, the embodiments of the present application are illustrated by taking the cross-medium temperature measurement device 10 applied to an induction cooker as an example. Referring to FIG. 2 and FIG. 3, FIG. 2 illustrates a schematic structural diagram of mounting a cross-medium temperature measurement device 10 at an induction cooker according to an embodiment of the present application. FIG. 3 illustrates a schematic structural diagram of a cross-medium temperature measurement device 10 according to an embodiment of the present application. The induction cooker may include a microcrystalline panel 20 and a base plate 30. A cookware may be placed upon the microcrystalline panel 20, while a cross-medium temperature measurement device 10 may be provided between the microcrystalline panel 20 and the base plate 30 to facilitate the mounting of the cross-medium temperature measurement device 10 while simultaneously enable the cross-medium temperature measurement device 10 to effectively conduct the temperature of the microcrystalline panel 20.

Referring to FIG. 3, in the present embodiment, the cross-medium temperature measurement device 10 may include a thermal conductor 110, a temperature sensor 120, and a thermal insulator 130.

The thermal conductor 110 includes a first surface 111 and a second surface 112 facing in opposite directions. The first surface 111 is configured to contact a medium that is in contact with the object to be measured. In the present embodiment, the microcrystalline panel 20 serves as this medium, while the cookware serves as the object to be measured; the thermal conductor 110 abuts against both the microcrystalline panel 20 and the base plate 30. A thermal conductivity coefficient of the thermal conductor 110 is greater than a thermal conductivity coefficient of the thermal insulator 130.

There are no specific limitations to the structure or material of the thermal conductor 110 in the embodiments of the present application. For example, in some embodiments, the thermal conductor 110 may be made from materials exhibiting high thermal conductivity. Specifically, the thermal conductor 110 may be made from at least one material selected from metals, ceramics, graphite, etc. These materials possess excellent thermal properties, can rapidly transfer heat, minimize thermal resistance, and enhance thermal conduction efficiency. The specific choice of thermal conductor material may be determined based on practical requirements and conditions.

In an embodiment, metallic materials, such as copper or silver, are commonly utilized for the thermal conductor 110, as they exhibit excellent thermal conductivity and high thermal stability. When a contact area between metals is relatively large, the metallic bonds between their atoms facilitate heat transfer, allowing heat to be diffused rapidly. Furthermore, metallic materials can withstand significant thermal stresses due to relatively high tensile strength and compressive resistance. However, metallic materials also present certain limitations, such as high density, high cost, and poor oxidation resistance.

Ceramic materials, such as aluminum oxide and silicon nitride, also serve as excellent thermal conductors 110. Ceramics possess advantages such as high melting points, high hardness, and low coefficients of thermal expansion and have superior stability in high-temperature environments. Furthermore, the interstitial spaces within ceramic materials are relatively small, which facilitates the rapid transfer of heat. However, the thermal conductivity of ceramic materials remains slightly lower than that of metallic materials. Moreover, the ceramic materials exhibit poor impact resistance and are prone to brittle fracture.

As a thermal conductor 110, graphite possesses excellent thermal conductivity and chemical stability. Within the graphite crystal structure, carbon atoms are arranged in a hexagonal planar layered configuration, forming strong π-bonds that enable the rapid transfer of heat between the graphite layers. Graphite also features a low coefficient of thermal expansion and excellent oxidation resistance to maintain stability in high-temperature environments. However, the tensile strength and compressive strength of graphite are relatively low.

In the present embodiment, a cross-section of the thermal conductor 110 may be a T-shaped structure. The thermal conductor 110 may include a contact portion 113 and a support portion 114. The support portion 114 may be connected to the contact portion 113. The first surface 111 may be located at the contact portion 113, and a cross-sectional area of the contact portion 113 may be greater than a cross-sectional area of the support portion 114. It can be understood that there are no limitations to the specific structure of the support portion 114 and the contact portion 113 in the embodiments of the present application. For example, both the support portion 114 and the contact portion 113 may be cylindrical structures. For another example, both the support portion 114 and the contact portion 113 may be cuboid-shaped structures. For yet another example, one of the support portion 114 and the contact portion 113 may be a cuboid-shaped structure while the other is a cylindrical structure, and so forth.

The embodiment of the present application is illustrated herein by taking both the support portion 114 and the contact portion 113 being cylindrical structures as an example. A diameter of the contact portion 113 is greater than a diameter of the support portion 114, resulting in the cross-sectional area of the contact portion 113 being greater than cross-sectional area of the support portion 114. When the thermal conductor 110 conducts heat, the heat is transferred from the contact portion 113 to the support portion 114. The cross-section of the contact portion 113 is defined as a section formed by intersecting the contact portion 113 with a plane perpendicular to the direction of heat transfer. Similarly, the cross-section of the support portion 114 is defined as a section formed by intersecting the support portion 114 with a plane perpendicular to the direction of heat transfer. The cross-sectional area of the contact portion 113 is greater than the cross-sectional area of the support portion 114 to generate a larger contact area between the contact portion 113 and the microcrystalline panel 20, facilitating the transfer of heat from the microcrystalline panel 20 to the thermal conductor 110. Consequently, this arrangement accelerates the speed at which the temperature sensor 120 senses the temperature of the thermal conductor 110 to further enhance the temperature measurement efficiency of the cross-medium temperature measurement device 10.

In an embodiment, the temperature sensor 120 may be provided inside the thermal conductor 110. The temperature of thermal conductor can be directly detected and the influence of the external environment on the temperature sensor 120 may be simultaneously minimized.

In another embodiment, the temperature sensor 120 may be directly printed onto an outer surface of the thermal conductor 110 through a printing process to ensure a closer connection between the temperature sensor 120 and the thermal conductor 110.

It should be noted that there are no limitations to the specific structure or type of the temperature sensor 120 in the embodiments of the present application. For example, the temperature sensor 120 may be implemented using at least one type of sensor selected from a negative temperature coefficient (NTC) thermistor sensor, an infrared temperature sensor 120, or a thermocouple sensor. The embodiments of the present application preferably adopt an NTC thermistor sensor.

In an embodiment, the NTC thermistor sensor may include at least one type of a ceramic NTC thermistor, a thin-film NTC thermistor, a glass NTC thermistor, or a silicon carbide NTC thermistor. The ceramic NTC thermistor adopts oxide ceramics as a primary material, exhibiting a high resistance-temperature coefficient and excellent stability; the thin-film NTC thermistor adopts metal oxide films as a primary material, offering high sensitivity and stability; the glass NTC thermistor adopts glass as a primary material, providing high stability and reliability; and the silicon carbide NTC thermistor feature high sensitivity and stability. Which specific type of temperature sensor 120 can be selected is based on actual requirements.

The thermal insulator 130 may be provided around a periphery of the thermal conductor 110. The thermal insulator 130 serves to mitigate the influence of the external environment on the thermal conductor 110 to reduce the influence of the external environment on the temperature sensor 120, and ultimately enhance the accuracy of temperature measurements for the object to be measured. The thermal insulator 130 is configured to block or impede heat transfer between the external environment and the thermal conductor 110 and this does not imply a "complete isolation of heat transfer." It is noted that, in an embodiment, the thermal insulator 130 may take the form of a solid-state thermal insulator, such as rubber, plastic, or wood. These materials possess complex molecular structures and weak intermolecular interactions, resulting in poor thermal conductivity.

In another embodiment, a gas, such as nitrogen or helium, may be adopted as the thermal insulator. These gases feature relatively large intermolecular distances and poor thermal conductivity. Such gases may be filled in a space between the microcrystalline panel 20 and the base plate 30. However, this approach imposes stringent requirements for the sealing integrity of the induction cooker. Consequently, a solid-state thermal insulator 130 is preferably adopted in the embodiments of the present application; the subsequent description proceeds by taking the thermal insulator 130 being made of a solid material as an example.

Furthermore, in the present embodiment, the thermal insulator 130 may include a housing 131 and a thermal insulation medium 132. In an embodiment, the housing 131 may be made of the aforementioned solid material.

The housing 131 may enclose a mounting cavity 1311 and the thermal conductor 110 may be embedded inside the mounting cavity 1311 and abut against the thermal insulator 130. That is to say, in the present embodiment, a shape and a dimension of the mounting cavity 1311 may correspond to a shape and a dimension of the thermal conductor 110. As previously mentioned, the cross-section of the thermal conductor 110 is the T-shaped structure; therefore, in the present embodiment, the structure of the mounting cavity 1311 may also take the form of a T-shaped cavity, to facilitate the mounting of the thermal conductor 110 within the housing 131.

In an embodiment, the mounting cavity 1311 may include a first mounting cavity 1311a and a second mounting cavity 1311b communicating with each other. The contact portion 113 may be embedded inside the first mounting cavity 1311a, while the support portion 114 may be embedded inside the second mounting cavity 1311b. In the present embodiment, when the thermal conductor 110 is embedded inside the mounting cavity 1311, a bottom surface of the first mounting cavity 1311a may abut against a bottom surface of the contact portion 113 to support the thermal conductor 110.

It is noted that terms "first" and "second" are only used for descriptive purposes, and cannot be understood as indicating or implying relative importance or implicitly indicating the number of technical features indicated. Therefore, the features defined with "first" and "second" may explicitly or implicitly include at least one of the features. In the description of the present application, "a plurality of" means at least two, such as two, three, etc., unless specifically defined otherwise.

An accommodation cavity 1312 is formed inside the housing 131, and a thermal insulation medium 132 may be filled inside the accommodation cavity 1312. It should be noted that there are no limitations to the specific structure of the accommodation cavity 1312 in the embodiments of the present application. For example, the accommodation cavity 1312 may take a form of a cylinder, a square prism, or the like, and the specific configuration of the accommodation cavity 1312 may be determined based on practical requirements. Furthermore, there is no limitation to a material used for the thermal insulation medium 132 in the embodiments of the present application. In the present embodiment, a thermal conductivity coefficient of the thermal insulation medium 132 is less than 1 W/(m·K). The thermal insulation medium 132 may be made of rubber, plastic, or wood, etc. These materials possess complex molecular structures and weak intermolecular interactions, resulting in poor thermal conductivity. Moreover, the thermal conductivity coefficient of the thermal insulation medium 132 is less than 0.12 W/(m·K). For example, the thermal insulation medium 132 may be made of foamed cement, rock wool, or aluminum silicate wool, etc. A thermal conductivity coefficient of the foamed cement ranges from 0.08 W/(m·K) to 0.28 W/(m·K). In the embodiments of the present application, the foamed cement with a thermal conductivity coefficient ranging from 0.08 W/(m·K) and 0.12 W/(m·K) may be adopted. A thermal conductivity coefficient of the rock wool ranges from 0.03 W/(m·K) to 0.047 W/(m·K), while a thermal conductivity coefficient of the aluminum silicate wool is less than 0.07 W/(m·K). The use of these aforementioned materials may further minimize the influence of the external environment on the thermal conductor 110 to reduce the influence of the external environment on the temperature sensor 120, and ultimately enhance the accuracy of temperature detection performed by the cross-medium temperature measurement device 10.

In some embodiments, the housing 131 may be configured without an accommodation cavity 1312; in such cases, the thermal insulation medium 132 may be placed directly inside the mounting cavity 1311 and be in direct contact with the thermal conductor 130. For example, in case that the thermal insulation medium 132 is air, and the thermal conductor 130 is placed inside the mounting cavity 1311, the air (acting as the thermal insulation medium 132) surrounds around the thermal conductor 130 to space the thermal conductor 130 from an inner wall of the housing 131. This arrangement also serves to mitigate the influence of the external environment on the thermal conductor 110. Furthermore, to ensure the positional stability of the thermal conductor 130, a positioning portion may be provided inside the housing 131 to secure the thermal conductor 130 while simultaneously spacing the thermal conductor 130 from the inner wall of the housing 131.

In the cross-medium temperature measurement device 10 according to the embodiments of the present application, a temperature sensor 120 is provided inside a thermal conductor 110, the thermal conductor 110 is embedded inside a mounting cavity 1311 enclosed by a housing 131 of a thermal insulator 130, an accommodation cavity 1312 formed inside the thermal insulator 130 is filled with a thermal insulation medium 132. The thermal insulator 130 is wrapped around the thermal conductor 110 to reduce the influence of the external environment on the thermal conductor 110 and further reduce the influence of the external environment on the temperature sensor 120. Ultimately, this configuration enhances the measurement accuracy of the cross-medium temperature measurement device 10 of the present application. Furthermore, a kitchen cooking appliance 1 using the cross-medium temperature measurement device 10 enables more accurate temperature measurement of the cookware placed upon the kitchen cooking appliance 1.

Furthermore, in an embodiment, the housing 131 may include an inner housing 1313 and an outer housing 1314. The inner housing 1313 may enclose the mounting cavity 1311, while the outer housing 1314 may be hermetically connected to the inner housing 1313, with a gap existing between an inner wall of the outer housing 1314 and an outer wall of the inner housing 1313. The outer housing 1314 surrounds outside the inner housing 1313 and jointly forms the accommodation cavity 1312 together with the inner housing 1313. Both the inner housing 1313 and the outer housing 1314 may be constructed as elastic housings 131. To facilitate manufacturing and processing, in the present embodiment, the inner housing 1313 and the outer housing 1314 may be made of the same material, for example, rubber or silicone. These materials possess excellent deformation capabilities and generally remain unaffected by temperatures up to 200°C, being conducive to enhancing stability of the housing 131.

The housing 131 is an elastic housing, and the thermal insulation medium 132 is placed inside the housing 131 and adhered to the inner wall of the housing 131. For example, an elastic adhering force exists between the thermal insulation medium 132 and the housing 131; and the thermal insulation medium 132 and the housing 131 are adhered together tightly under the influence of this elastic force.

In a more specific embodiment, butyl rubber may be adopted as the thermal insulation medium 132, while natural rubber may be adopted for the housing 131. Since a thermal conductivity coefficient of butyl rubber is 0.09 W/(m·K), the butyl rubber exhibits excellent thermal insulation performance. Furthermore, as an amorphous colloidal substance, the butyl rubber possesses excellent flow properties and may be allowed to be injected into the rubber housing 131, ensuring that the thermal insulation medium 132 is adhered tightly to the housing 131. Consequently, this prevents decrease in the thermal insulation effectiveness due to formation of a gap between the thermal insulation medium 132 and the housing 131. Additionally, due to an elastic nature of the rubber housing 131, the rubber may generate a certain degree of elastic deformation during the process of injecting butyl rubber inside the rubber housing 131 to ensure that an entire housing 131 is filled with the butyl rubber after injection is completed. Similarly, this prevents decrease in the thermal insulation effectiveness due to formation of a gap between the thermal insulation medium 132 and the housing 131.

Furthermore, in the present embodiment, thicknesses of both the outer housing 1314 and the inner housing 1313 are greater than 1 mm. This design prevents the outer and inner housings from being excessively thin, avoiding potential damage during the filling and injection of the thermal insulation medium 132. Moreover, too thin outer and inner housings may result in suboptimal thermal insulation performance of the thermal insulator.

It can be understood that there is no limitation to the exact or maximum thicknesses of the outer housing 1314 and the inner housing 1313 in the embodiments of the present application and the exact or maximum thicknesses of the outer housing 1314 and the inner housing 1313 may be selected according to actual circumstances. For example, when the cross-medium temperature measurement device 10 is mounted within an induction cooker featuring a relatively large gap between the microcrystalline panel 20 and the base plate 30, the thicknesses of the outer housing 1314 and the inner housing 1313 may be set to be relatively large. This ensures that both ends of the thermal insulator abut against the microcrystalline panel 20 and the base plate 30 to guarantee the installation stability of the cross-medium temperature measurement device 10 and, consequently, ensure the stability of its temperature measurement operations.

In an embodiment, a distance between the inner housing 1313 and the outer housing 1314 is greater than 1 mm. This configuration may prevent the space within the mounting cavity 1311 from becoming excessively small to result in inability to perform thermal insulation function or suboptimal thermal insulation performance of the thermal insulator due to less amount of thermal insulation medium 132.

It can be understood that there is no limitation to an exact spacing between the outer housing 1314 and the inner housing 1313 in the embodiments of the present application and this spacing may be selected according to actual circumstances. In some embodiments, the distance between the outer housing 1314 and the inner housing 1313 may be set to less than 10 mm. This configuration prevents the thermal insulator 130 from becoming excessively bulky, being conducive to cost savings.

Furthermore, in an embodiment, a plurality of temperature sensors 120 may be provided. The plurality of temperature sensors 120 may be provided uniformly inside the thermal conductor 110 to be conducive to improving the accuracy of temperature measurement performed by the cross-medium temperature measurement device 10.

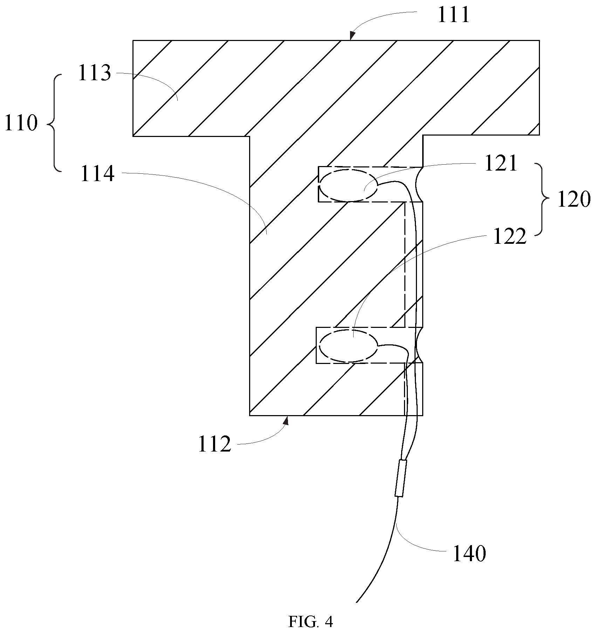

Referring to FIG. 4, FIG. 4 illustrates a schematic structural diagram of a thermal conductor, a temperature sensor and a wire according to an embodiment of the present application. The temperature sensor 120 is disposed on the support portion 114. Specifically, in the present embodiment, two temperature sensors 120, namely, a first temperature sensor 121 and a second temperature sensor 122 may be provided at an interval from one another. It should be noted that there is no limitation to specific locations of the first temperature sensor 121 and the second temperature sensor 122 in the embodiment of the present application. For example, the first temperature sensor 121 may be provided adjacent to the first surface 111, while the second temperature sensor 122 may be provided adjacent to the second surface 112. In the present embodiment, the arrangement of two temperature sensors 120 enables temperature measurement of the object to be measured by measuring heat flux.

Furthermore, in an embodiment, both the first temperature sensor 121 and the second temperature sensor 122 may be provided along a central axis of the thermal conductor 110 and arranged at an interval along the direction of the central axis of the thermal conductor 110. It can be understood that the closer the two temperature sensors 120 are to the edges of the thermal conductor 110, the greater the likelihood of the two temperature sensors 120 being influenced by external temperatures. Therefore, the aforementioned arrangement of the first temperature sensor 121 and the second temperature sensor 122 further mitigates the influence of external temperatures on the sensors, being conducive to enhancing measurement accuracy for both the first temperature sensor 121 and the second temperature sensor 122.

In an embodiment, a communication hole 133 is formed at an end of the housing 131. The cross-medium temperature measurement device 10 may further include a wire 140, an end of the wire 140 is electrically connected to the temperature sensor 120, while another end is led from the communication hole 133.

It should be noted that there is no limitation to a specific location of the communication hole 133 in the embodiment of the present application. For example, the communication hole 133 may be provided at an end distal from the first surface 111. Since the first surface 111 is in contact with a medium that is in contact with the object to be measured, providing a communication hole 133 directly on the first surface 111 affects the heat transferred by the medium to the thermal conductor 110. Consequently, the aforementioned arrangement of the wire 140 minimizes the influence of the external environment on the temperature sensor 120 during the wire leading process to facilitates an improvement in the measurement accuracy of the temperature sensor 120 and enhance the overall measurement accuracy of the cross-medium temperature measurement device 10.

It should be further noted that in the present application, unless explicitly stated and defined otherwise, the terms "mounted," "connected with," "connected," and "fixed", etc. shall be understood broadly, for example, it may be either fixedly connected or detachably connected, or can be integrated; it may be mechanically connected, or electrically connected; it may be directly connected, or indirectly connected through an intermediate medium and may be communication between the interior of two elements or interactive relationship between two elements, unless explicitly defined otherwise. The specific meanings of the terms above in the present application can be understood by a person skilled in the art in accordance with specific conditions.

A working principle of the cross-medium temperature measurement device 10 according to the embodiments of the present application is described below.

Since the first surface 111 of the thermal conductor 110 is in contact with a medium that is in contact with the object to be measured, the object to be measured transfers its temperature to the medium, which, in turn, transfers that temperature to the thermal conductor 110. The thermal insulator 130 provided around the periphery of the thermal conductor 110 serves to mitigate the influence of ambient temperature. Specifically, the outer housing 1314 of the thermal insulator 130 may enclose the mounting cavity 1311 within which the thermal conductor 110 is provided and the outer housing 1314 itself provides a certain degree of thermal insulation. Furthermore, the accommodation cavity 1312 is formed inside the housing 131 and may be filled with the thermal insulation medium 132 to further enhance the thermal insulation effect.

In the kitchen cooking appliance 1 according to the embodiments of the present application, a temperature sensor 120 is provided inside a thermal conductor 110, the thermal conductor 110 is embedded inside a mounting cavity 1311 enclosed by a housing 131 of a thermal insulator 130, an accommodation cavity 1312 formed inside the thermal insulator 130 is filled with a thermal insulation medium 132. The thermal insulator 130 is wrapped around the thermal conductor 110 to reduce the influence of the external environment on the thermal conductor 110 and further reduce the influence of the external environment on the temperature sensor 120. Ultimately, this configuration enhances the measurement accuracy of the cross-medium temperature measurement device 10 of the present application. Furthermore, a kitchen cooking appliance 1 using the cross-medium temperature measurement device 10 enables more accurate temperature measurement of the cookware placed upon the kitchen cooking appliance 1.

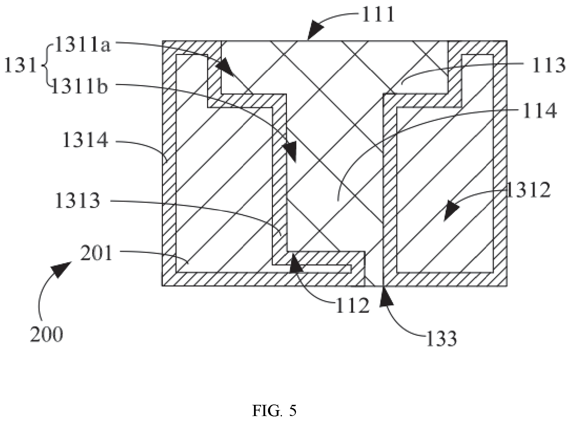

Referring to FIG. 5, according to an embodiment of the present application, there is provided a temperature measurement device including a thermal conductor, a temperature sensor and a thermal isolator 200. The temperature sensor is provided at the thermal conductor. The thermal isolator 200 may include a housing and a thermal isolation medium 201. The housing encloses a mounting cavity and the thermal conductor is embedded inside the mounting cavity and is in contact with the thermal isolator 200. The housing also forms an accommodation cavity within which a thermal isolation medium 201 is provided and a thermal conductivity coefficient of the thermal isolator 200 is less than a thermal conductivity coefficient of the thermal conductor.

The temperature measurement device in the present embodiment may include one or more features of the cross-medium temperature measurement device in any of the aforementioned embodiments. Provided there are no conflicts, features from the cross-medium temperature measurement device described in any of the preceding embodiments may be combined with the temperature measurement device of the present embodiment. For example, the thermal conductor in the present embodiment may include one or more features of the thermal conductor 110 described in any of the preceding embodiments. For example, the thermal conductor may include the contact portion 113 and the support portion 114 of the aforementioned thermal conductor 110. The temperature sensor in the present embodiment may be understood as corresponding to the temperature sensor 120 described in any of the preceding embodiments, and may include one or more features of the temperature sensor 120.

The thermal isolator 200 in the present embodiment is configured to block or impede heat transfer between the external environment and the thermal conductor. The thermal isolator 200 may include one feature or a combination of more features of the thermal insulator 130 provided in any of the aforementioned embodiments. For example, the thermal isolator 200 may further include the housing 131 of the thermal insulator 130 described above. The thermal isolation medium 201 in the present embodiment may include one or more features of the thermal insulation medium 132 provided in any of the aforementioned embodiments. For example, the thermal insulation medium 132 may include at least one material selected from rubber, plastic, wood, foamed concrete, rock wool, aluminum silicate wool, etc.

The above embodiments are only used to explain the solutions of the present application, and are not limited thereto; although the present application has been described in detail with reference to the foregoing embodiments, it should be understood by those skilled in the art that they can still modify the solutions documented in the foregoing embodiments and make equivalent substitutions to a part of the features; these modifications and substitutions do not make the essence of the corresponding solutions depart from the scope of the solutions of various embodiments of the present application, which may all be deemed to fall within the scope of protection of the present application.

## Claims

1. A cross-medium temperature measurement device, comprising:
a thermal conductor,
a temperature sensor provided at the thermal conductor; and
a thermal insulator comprising a housing and a thermal insulation medium, wherein:
the housing encloses a mounting cavity, the thermal conductor being embedded inside the mounting cavity and abutting against the thermal insulator; and
an accommodation cavity is formed within the housing, the thermal insulation medium being filled inside the accommodation cavity.

2. The cross-medium temperature measurement device of claim 1, wherein a thermal conductivity coefficient of the thermal insulation medium is less than 1 W/(m·K).

3. The cross-medium temperature measurement device of claim 1 or 2, wherein the housing comprises an inner housing and an outer housing, the inner housing enclosing the mounting cavity, the outer housing being hermetically connected to the inner housing and enclosing the accommodation cavity, both the inner housing and the outer housing being elastic housings.

4. The cross-medium temperature measurement device of claim 3, wherein thicknesses of both the outer housing and the inner housing are greater than 1 mm.

5. The cross-medium temperature measurement device of claim 3 or 4, wherein a spacing between the inner housing and the outer housing is greater than 1 mm.

6. The cross-medium temperature measurement device of any of claims 3 to 5, wherein a spacing between the inner housing and the outer housing is less than 10 mm.

7. The cross-medium temperature measurement device of any of claims 1 to 6, wherein:
the thermal conductor comprises a contact portion and a support portion connected to the contact portion, a cross-sectional area of the contact portion being greater than a cross-sectional area of the support portion;
the temperature sensor is provided at the support portion; and
the mounting cavity comprises a first mounting cavity and a second mounting cavity communicating with each other, the contact portion being embedded inside the first mounting cavity, and the support portion being embedded inside the second mounting cavity.

8. The cross-medium temperature measurement device of any of claims 1 to 7, wherein the temperature sensor comprises a first temperature sensor and a second temperature sensor, the first temperature sensor and the second temperature sensor being provided at an interval.

9. The cross-medium temperature measurement device of claim 8, wherein both the first temperature sensor and the second temperature sensor are provided along a central axis of the thermal conductor and arranged at an interval along the direction of the central axis of the thermal conductor.

10. The cross-medium temperature measurement device of claim 8 or 9, wherein the first temperature sensor and the second temperature sensor are provided adjacent to two opposite surfaces of the thermal conductor respectively.

11. The cross-medium temperature measurement device of any of claims 1 to 10, wherein a communication hole is formed at an end of the housing, and the cross-medium temperature measurement device further comprises a wire, an end of the wire being electrically connected to the temperature sensor, and another end being led from the communication hole.

12. The cross-medium temperature measurement device of claim 11, wherein the thermal conductor comprises a first surface and a second surface facing in opposite directions, the first surface being configured to be in contact with an object to be measured, and the communication hole being provided at an end distal from the first surface.

13. The cross-medium temperature measurement device of any of claims 1 to 12, wherein an elastic adhering force exists between the housing and the thermal insulation medium to enable the thermal insulation medium to be adhered tightly to the housing.

14. A kitchen cooking appliance, provided with the cross-medium temperature measurement device of any of claims 1 to 13.

15. A temperature measurement device, comprising:
a thermal conductor,
a temperature sensor provided at the thermal conductor; and
a thermal isolator comprising a housing and a thermal isolation medium, wherein:
the housing encloses a mounting cavity, the thermal conductor being embedded inside the mounting cavity and being in contact with the thermal isolator; and
an accommodation cavity is formed within the housing, the thermal isolation medium being provided inside the accommodation cavity,
wherein a thermal conductivity coefficient of the thermal isolator is less than a thermal conductivity coefficient of the thermal conductor.

16. The temperature measurement device of claim 15, wherein the housing comprises an inner housing and an outer housing, the inner housing enclosing the mounting cavity, the outer housing being hermetically connected to the inner housing and enclosing the accommodation cavity, both the inner housing and the outer housing being elastic housings.

17. The temperature measurement device of claim 15 or 16, wherein:
the thermal conductor comprises a contact portion and a support portion connected to the contact portion, a cross-sectional area of the contact portion being greater than a cross-sectional area of the support portion;
the temperature sensor is provided at the support portion; and
the mounting cavity comprises a first mounting cavity and a second mounting cavity communicating with each other, the contact portion being embedded inside the first mounting cavity, and the support portion being embedded inside the second mounting cavity.

18. The temperature measurement device of any of claims 15 to 17, wherein the temperature sensor comprises a first temperature sensor and a second temperature sensor, the first temperature sensor and the second temperature sensor being provided at an interval.

19. The temperature measurement device of claim 18, wherein both the first temperature sensor and the second temperature sensor are provided along a central axis of the thermal conductor and arranged at an interval along the direction of the central axis of the thermal conductor.

20. The temperature measurement device of any of claims 15 to 19, wherein a communication hole is formed at an end of the housing, and the cross-medium temperature measurement device further comprises a wire, an end of the wire being electrically connected to the temperature sensor, and another end being led from the communication hole.
